# EUROPEAN PATENT APPLICATION

(11) **EP 2 894 801 A1**
(43) Date of publication of application: **15.07.2015**
(21) Application number: 13834423.9
(22) Date of filing: 09.08.2013
(51) Int. Cl.: H04J 99/00, H04B 7/04

(54) **WIRELESS BASE STATION, WIRELESS COMMUNICATION SYSTEM, AND WIRELESS COMMUNICATION METHOD**

(30) Priority: 07.09.2012 JP 2012197746
(71) Applicant: NTT DOCOMO, INC., Chiyoda-ku Tokyo 100-6150 (JP)
(72) Inventor: NAGATA, Satoshi, Tokyo 100-6150 (JP); SONG, Yang, Beijing 100190 (CN); YUN, Xiang, Beijing 100190 (CN); CHEN, Lan, Beijing 100190 (CN)
(74) Representative: Hoffmann Eitle
(86) International application number: PCT/JP2013/071602
(87) International publication number: WO 2014/038347

(57) **Abstract**

The present invention is designed to reduce the increase of the overhead of reference signals in MIMO transmission in which 3D beam forming is used. An antenna section that forms a 3D beam that is formed with a horizontal beam having directivity in a horizontal plane and a vertical beam having directivity in a vertical plane, a mapping section that maps reference signals in association with predetermined antenna ports, and a precoding processing section that carries out a precoding process of the reference signals are provided, and the antenna section has a horizontal antenna element sequence, which is formed with a plurality of antenna elements and which serves as a horizontal beam forming unit, and a vertical antenna element sequence, which is formed with a plurality of antenna elements and which serves as a vertical beam forming unit, and the mapping section assigns the same antenna port to reference signals that correspond respectively to a plurality of antenna elements constituting the same horizontal antenna element sequence or a plurality of antenna elements constituting the same vertical antenna element sequence.

## Description

### Technical Field

The present invention relates to a radio base station, a radio communication system and a radio communication method in a next-generation mobile communication system.

### Background Art

In a UMTS (Universal Mobile Telecommunications System) network, long-term evolution (LTE) is under study for the purposes of further increasing high-speed data rates, providing low delay, and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used on in uplink channels (uplink).

In LTE, MIMO (Multi Input Multi Output), which achieves improved data rates (spectral efficiency) by transmitting and receiving data using a plurality of antennas, is defined. In MIMO, a plurality of transmitting/receiving antennas are provided in the transmitter/receiver, so that different information sequences are transmitted from different transmitting antennas at the same time. Meanwhile, on the receiving side, taking advantage of the fact that fading variation is produced differently between the transmitting/receiving antennas, information sequences that have been transmitted at the same time are separated and detected.

As MIMO transmission schemes, single-user MIMO (SU-MIMO), in which transmission information sequences for the same user are transmitted at the same time from different transmitting antennas, and multi-user MIMO (MU-MIMO), in which transmission information sequences for different users are transmitted at the same time from different transmitting antennas, have been proposed. In SU-MIMO and MU-MIMO, optimal PMIs (Precoding Matrix Indicators) to match the amount of phase and amplitude control (precoding weights) to be set in the antennas are selected from codebooks, and fed back to the transmitter as channel information (CSI: Channel State Information). On the transmitter side, each transmitting antenna is controlled based on the PMIs fed back from the receiver, and transmission information sequences are transmitted.

### Citation List

### Non-Patent Literature

Non-Patent Literature 1: 3GPP TR 25.913 "Requirements for Evolved UTRA and Evolved UTRAN"

### Summary of Invention

### Technical Problem

Also, successor systems of LTE (referred to as, for example, "LTE-advanced" or "LTE enhancement" (hereinafter referred to as "LTE-A")) are under study for the purpose of achieving further broadbandization and increased speed beyond LTE. In this LTE-A, application of MIMO transmission that uses beam forming (3D beam forming) to give directivity in the vertical direction is also under study.

In 3D beam forming, the number of antenna elements increases, and, accompanying this, the overhead of reference signals such as CSI-RSs (CSI-Reference Signals) and CRSs (Common Reference Signals) are expected to increase.

The present invention has been made in view of the above, and it is therefore an object of the present invention to provide a radio base station, a radio communication system and a radio communication method that can reduce the increase of the overhead of reference signals in MIMO transmission using 3D beam forming.

### Solution to Problem

The radio base station of the present invention has an antenna section that forms a 3D beam that is formed with a horizontal beam having directivity in a horizontal plane and a vertical beam having directivity in a vertical plane, a mapping section that maps reference signals in association with predetermined antenna ports, and a precoding processing section that carries out a precoding process of the reference signals, and the antenna section comprises a horizontal antenna element sequence, which is formed with a plurality of antenna elements and which serves as a horizontal beam forming unit, and a vertical antenna element sequence, which is formed with a plurality of antenna elements and which serves as a vertical beam forming unit, and the mapping section assigns the same antenna port to reference signals that correspond respectively to a plurality of antenna elements constituting the same horizontal antenna element sequence or a plurality of antenna elements constituting the same vertical antenna element sequence.

### Advantageous Effects of Invention

According to the present invention, it is possible to reduce the increase of the overhead of reference signals in MIMO transmission using 3D beam forming.

### Brief Description of Drawings

FIG. 1 is a diagram to show examples of mapping of CRSs;
FIG. 2 is a diagram to show examples of mapping of CSI-RSs;
FIG. 3 is a diagram to explain a communication scheme (3D MIMO/beam forming) that may be applied to an LTE-A system;
FIG. 4 provides diagrams to show schematic views of a 2D transmitting antenna and a 3D transmitting antenna;
FIG. 5 provides diagrams to explain PMIs in 2D channels and 3D channels;
FIG. 6 provides diagrams to explain examples of 3D antenna structures;
FIG. 7 provides diagrams to explain a horizontal beam/a vertical beam/a 3D beam;
FIG. 8 is a diagram to explain horizontal domain channels produced by a plurality of vertical beams;
FIG. 9 provides diagrams to show examples of mapping of reference signals (CSR-RSs) when 3D beam forming is employed;
FIG. 10 is a diagram to show examples of mapping of reference signals (CSR-RSs) when 3D beam forming is employed;
FIG. 11 is a diagram to explain an example of a precoding process of reference signals (CSR-RSs) when 3D beam forming is employed;
FIG. 12 is a diagram to show an example of a precoding process of reference signals (CSR-RSs) when 3D beam forming is employed;
FIG. 13 is a diagram to show an example of mapping and a precoding process of reference signals (CSR-RSs) when 3D beam forming is employed;
FIG. 14 is a diagram to show an example of mapping of reference signals (CRSs) when 3D beam forming is employed;
FIG. 15 is a diagram to show an example of process steps between a radio base station and a user terminal when 3D beam forming is employed;
FIG. 16 is a diagram to explain a system structure of a radio communication system according to the present embodiment;
FIG. 17 is a diagram to explain an overall structure of a radio base station according to the present embodiment;
FIG. 18 is a diagram to explain an overall structure of a user terminal according to the present embodiment;
FIG. 19 is a diagram to explain functional configurations of a radio base station according to the present embodiment; and
FIG. 20 is a diagram to explain functional configurations of a user terminal according to the present embodiment.

### Description of Embodiments

First, measurement reference signals in the LTE-A system will be described. CRSs, CSI-RSs and so on are used as measurement reference signals in the LTE-A system.

CRSs were introduced in Rel-8, and are used in cell search, channel estimation and so on. CRS signal sequences are pseudo-random sequences, and are subjected to QPSK modulation. QPSK-modulated CRSs are mapped to a plurality of resource elements (REs) in accordance with predetermined rules. Note that CRSs are not user-specific reference signals like DMRSs (DeModulation Reference Signals), but are cell-specific reference signals, and therefore are not pre-coded.

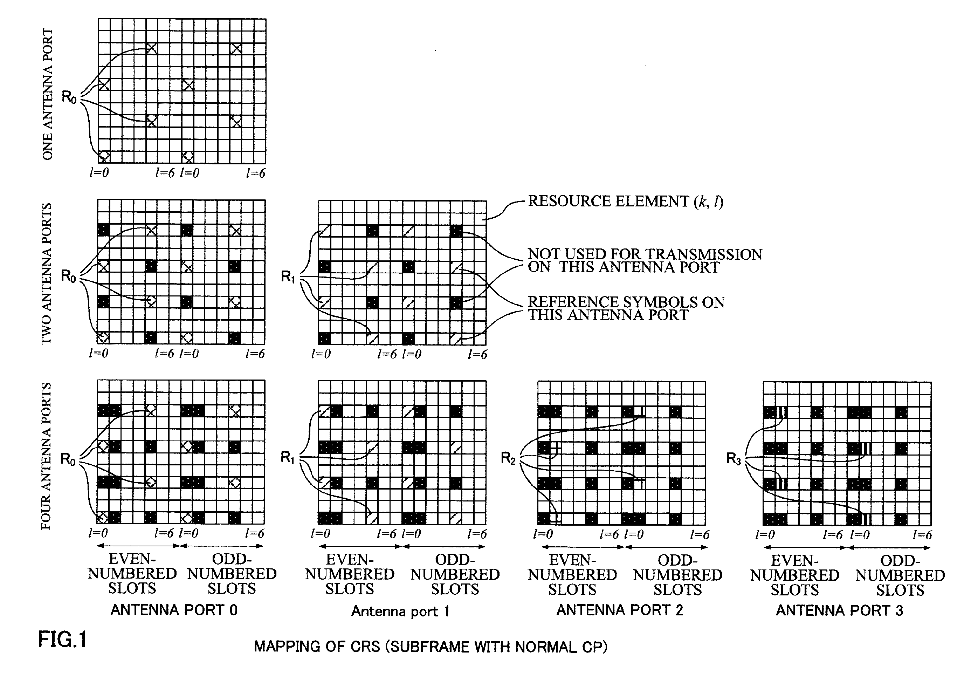

FIG. 1 is a diagram to show examples of mapping of CRSs when the number of antenna ports is one, two and four. As shown in FIG. 1, CRSs of maximum four antenna ports (which are numbered 0 to 3) are supported, so that channel estimation for maximum four channels can be carried out in a user terminal UE. The CRSs (R₀ to R₃) of each antenna port are mapped to mutually different resource elements (REs), and are orthogonally-multiplexed by time division multiplexing (TDM)/frequency division multiplexing (FDM).

Meanwhile, CSI-RSs are measurement reference signals that were introduced in Rel-10 for the purpose of estimating channel states. CSI-RS signal sequences are pseudo-random sequences and subjected to QPSK modulation. QPSK-modulated CSI-RSs are mapped to a plurality of resource elements (REs) in accordance with predetermined rules. Note that CSI-RSs are not pre-coded either.

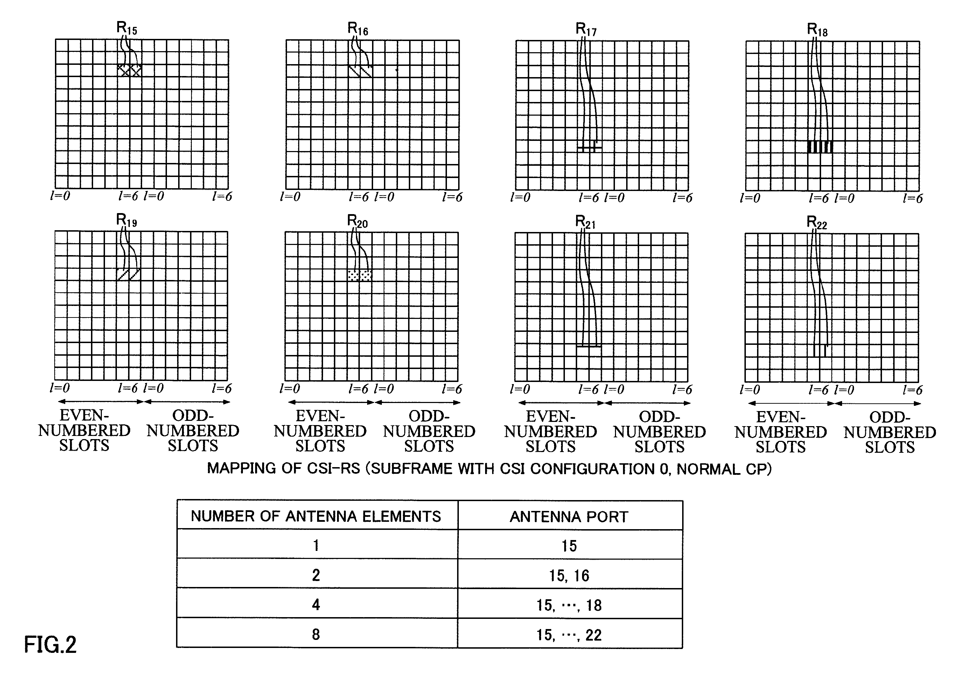

FIG. 2 is a diagram to show examples of mapping of CSI-RSs when the number of antenna ports is eight. As shown in FIG. 2, CSI-RSs of maximum eight antenna ports (which are numbered 15 to 22) are supported, so that channel estimation for maximum eight channels can be carried out in a user terminal UE. The CSI-RSs (R₁₅ to R₂₂) of each antenna port are orthogonally-multiplexed by time division multiplexing (TDM)/frequency division multiplexing (FDM)/code division multiplexing (CDM).

For example, in FIG. 2, the CSI-RSs of the antenna ports 15 and 16 (R₁₅ and R₁₆) are mapped to the same resource elements (REs) and code-division-multiplexed (CDM). The same holds with the CSI-RSs of the antenna ports 17 and 18 (R₁₇ and R₁₈), the CSI-RSs of the antenna ports 19 and 20 (R₁₉ and R₂₀) and the CSI-RSs of the antenna ports 21 and 22 (R₂₁ and R₂₂).

Note that, in FIG. 2, not only the CSI-RSs when the number of antenna ports is eight, but also the CSI-RSs when the number of antenna ports is one, two and four are supported as well. In such cases, a nest structure is employed, so that the CSI-RS of each antenna port are mapped to even a larger number of resource elements (REs).

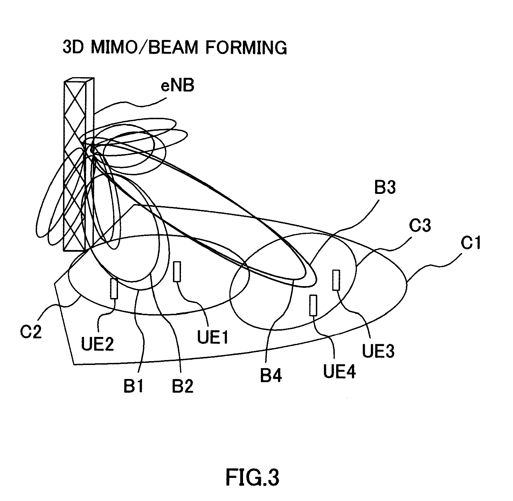

Next, 3D beam forming will be described. FIG. 3 is a conceptual diagram of MIMO transmission in which 3D beam forming is used. As shown in FIG. 3, in MIMO transmission using 3D beam forming, 3D beams having directivity in the vertical plane in addition to the horizontal plane are output from the transmitting antennas of the radio base station eNB. By means of 3D beams having varying directivities on the vertical plane, the cell C1 of the radio base station eNB is sectorized into an inner cell C2 and an outer cell C3.

In FIG. 3, the radio base station eNB outputs 3D beams B1 and B2 to user terminals UE1 and UE2 located in the inner cell C2, respectively, and carries out downlink MIMO transmission. Meanwhile, the radio base station eNB outputs 3D beams B3 and B4 to user terminals UE3 and UE4 located in the outer cell C3, respectively, and carries out downlink MIMO transmission. These 3D beams are made possible by means of 3D transmitting antennas.

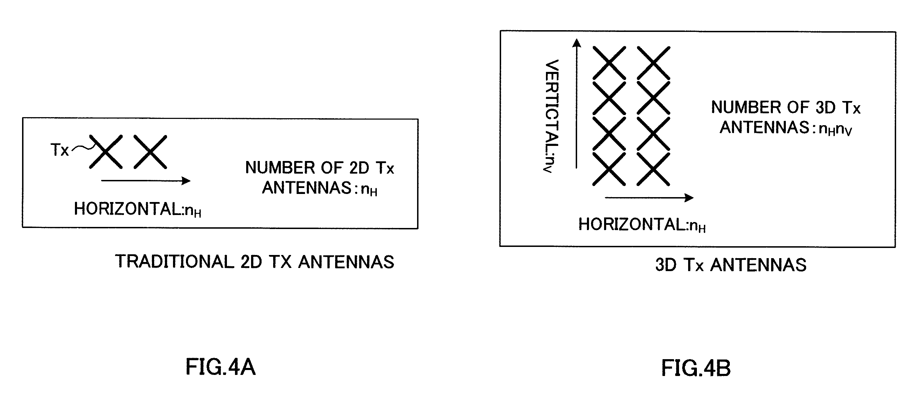

In 3D beam forming, it might occur that, compared to 2D beam forming, the number of transmitting antenna elements (Tx antenna elements) provided in a radio base station increases significantly. FIG. 4 shows schematic views of a 2D transmitting antenna and a 3D transmitting antenna.

FIG. 4A shows a schematic view of a 2D transmitting antenna, and FIG. 4B shows a schematic view of a 3D transmitting antenna. As shown in FIG. 4A, a 2D transmitting antenna is formed with a plurality of (for example, four) antenna elements (4Tx) that are provided along the horizontal direction. As shown in FIG. 4B, a 3D transmitting antenna is formed with a plurality of (for example, four) antenna elements (4Tx) that are provided along the horizontal direction, and a plurality of (for example, four) antenna elements (4Tx) that are provided along the vertical direction.

That is, the number of antenna elements (n_{H}) constituting the 2D transmitting antenna is four (four in one row), and the number of antenna elements (n_{H} and n_{V}) constituting the 3D transmitting antenna is sixteen (four in one row and four in one column). In this case, the antenna has horizontal antenna element sequences (rows), which are each formed with a plurality of antenna elements and which serve as horizontal beam forming units, and vertical antenna element sequences (columns), which are each formed with a plurality of antenna elements and which serve as vertical beam forming units.

Consequently, when 3D beam forming is employed and the number of antenna ports for reference signals is set in accordance with the number of antenna elements, if, for example, CSI-RS antenna ports are assigned to all the antenna elements individually, the overhead of CSI-RSs increases significantly.

Meanwhile, in order to reduce the increase of the overhead of CSI-RSs, it may be possible to transmit CSI-RSs using part of the antenna elements, not all the antenna elements. However, in this case, the measurement accuracy of channel quality decreases, and therefore there is a concern that the performance of 3D beam forming might decrease as well.

So, the present inventors have conceived of making the number of antenna ports for reference signals smaller than the total number of transmitting antenna elements, by assigning a specific antenna port to the reference signals for a group of a plurality of transmitting antenna elements (antenna element sequence) (for example, by mapping to the same radio resources) that form one vertical beam (or horizontal beam) when 3D beam forming is employed. Furthermore, the present inventors have found out mapping the reference signals in the antenna elements constituting a vertical beam element sequence (or a horizontal beam element sequence) that serves as a forming unit of the vertical beam (or horizontal beam), to a predetermined antenna port (the same radio resources) and also multiplying these reference signals by the weights of a precoder for forming a predetermined beam. By this means, it is possible to reduce the increase of the overhead of reference signals and also maintain the accuracy of 3D channel measurements.

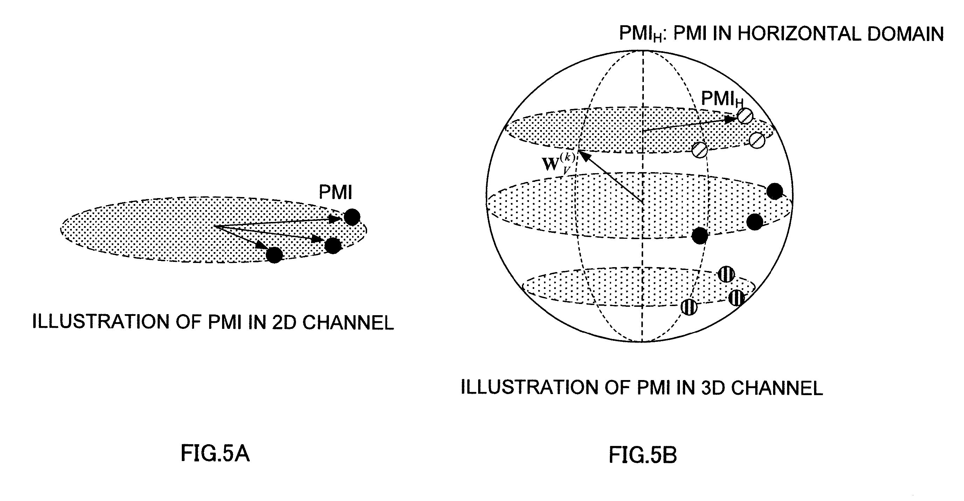

Now, PMIs in 2D channels used in 2D beam forming and 3D channels used in 3D beam forming will be described with reference to FIG. 5. FIG. 5A shows PMIs in a 2D channel (conventional PMIs), and FIG. 5B shows the PMI_{H}'s of horizontal planes (horizontal domains) in a 3D channel when the present embodiment is employed.

In FIG. 5B, each vertical beam (for example, the k-th vertical beam (Wᵥ^{(k)})) forms the horizontal domain channel (horizontal channel) corresponding to that vertical beam, and the PMI_{H} of that horizontal channel is shown. That is, a PMI_{H} is equivalent to a 2D channel PMI. In the case illustrated in FIG. 5B, from the user terminal UE side, it is possible to see the 3D channel as the state of a 2D horizontal channel corresponding to a predetermined vertical beam, by precoding of measurement reference signals.

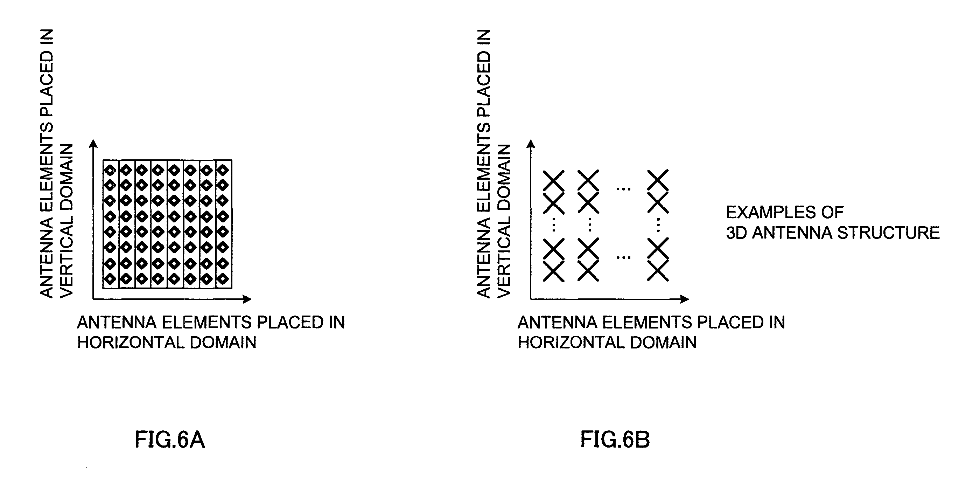

Next, an example of a 3D antenna structure that is employed with the present embodiment will be described. To realize 3D beam forming/3D MIMO, a plurality of antenna elements need to be placed in both the horizontal domain and the vertical domain. FIG. 6 shows examples of 3D antenna structures. FIG. 6A shows a case where antenna elements that are designed on a reduced scale are placed along the horizontal domain and the vertical domain, and FIG. 6B shows a cross-polarized antenna, in which antenna elements are placed to cross one another in the horizontal domain and the vertical domain.

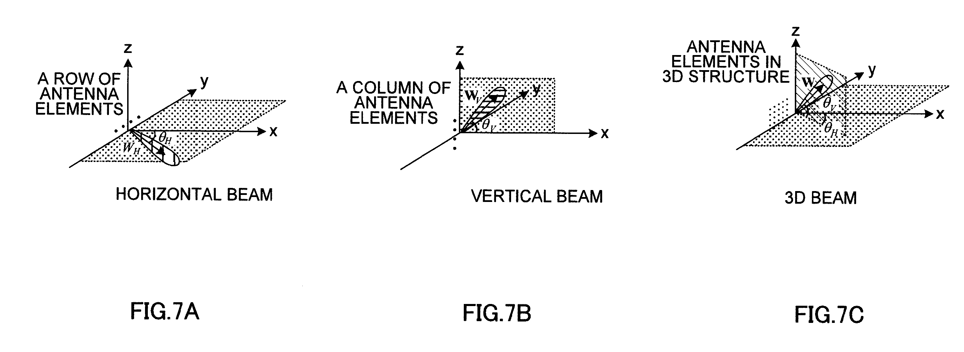

A horizontal beam can be formed by pre-coding a plurality of horizontal antenna elements placed in the horizontal domain (or in the horizontal direction) (or a horizontal antenna element sequence (the antenna elements to constitute one row in FIG. 6)) using a horizontal precoder (W_{H}). For example, as shown in FIG. 7A, a horizontal beam is formed to have an angle θ_{H} in the horizontal domain, based on a horizontal precoder (W_{H}).

A vertical beam can be formed by pre-coding a plurality of vertical antenna elements placed in the vertical domain (or in the vertical direction) (or a vertical antenna element sequence (the antenna elements to constitute one column in FIG. 6)) using a vertical precoder (W_{V}). For example, as shown in FIG. 7B, a vertical beam is formed to have an angle θ_{V} in the vertical domain, based on a vertical precoder (W_{V}). Also, a plurality of vertical antenna elements or a vertical antenna element sequence may be configured to have the same polarized elements in the vertical domain (or in the vertical direction).

A 3D beam can be formed using a plurality of antenna elements that are placed along the horizontal direction and the horizontal direction, by combining a horizontal precoder (W_{H}) and a vertical precoder (W_{V}). For example, as shown in FIG. 7C, a 3D beam can be formed by combining the horizontal beam of FIG. 7A and the vertical beam of FIG. 7B.

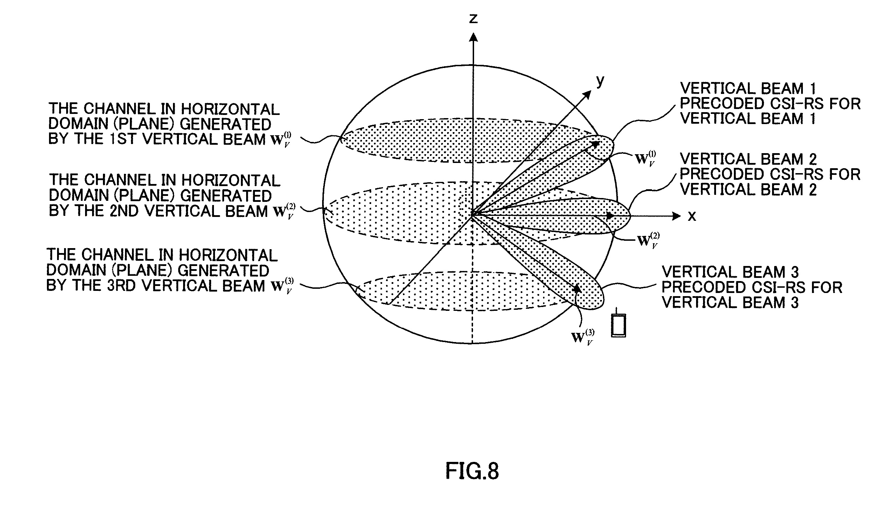

Given the situation where three vertical beams are formed, FIG. 8 shows the horizontal domain channels produced by each vertical beam. To be more specific, in FIG. 8, the channels in the horizontal domain that are produced by the vertical beam 1, the vertical beam 2 and the vertical beam 3, respectively, are shown. As noted earlier, the vertical beams 1 to 3 are formed by pre-coding vertical antenna elements (vertical antenna element sequence) using vertical precoders (Wᵥ⁽¹⁾, Wᵥ⁽²⁾ and Wᵥ⁽³⁾, respectively.

Also, in a user terminal, a plurality of reference signals that are pre-coded on a per vertical beam basis are required, in order to measure each horizontal domain channel produced by the vertical beams. Consequently, a radio base station maps reference signals such as CSI-RSs to radio resources adequately, based on the number of antenna elements and the number of vertical beams (or the number of horizontal beams) to form, and transmits these to the user terminal.

With the present embodiment, the radio base station maps reference signals to predetermined antenna ports, and, after that, performs the precoding process of these reference signals using the weighting coefficients (weights) of precoders that form predetermined vertical beams (or horizontal beams). Now, the mapping and precoding process of reference signals (CSI-RSs and/or CRSs) according to the present embodiment will be described with reference to the accompanying drawings.

### <Reference Signal Mapping>

First, a method of mapping reference signal symbols such as CSI-RSs and/or CRSs and so on in association with predetermined antenna ports will be described. Note that, in the following description, CSI-RSs will be described as an example of reference signals. Also, in the following description, a structure will be described, as a 3D antenna structure, in which two transmitting antennas are provided in the horizontal direction and in the vertical direction (two columns × two rows (total 4Tx)). Obviously, the 3D antenna structure is by no means limited to this.

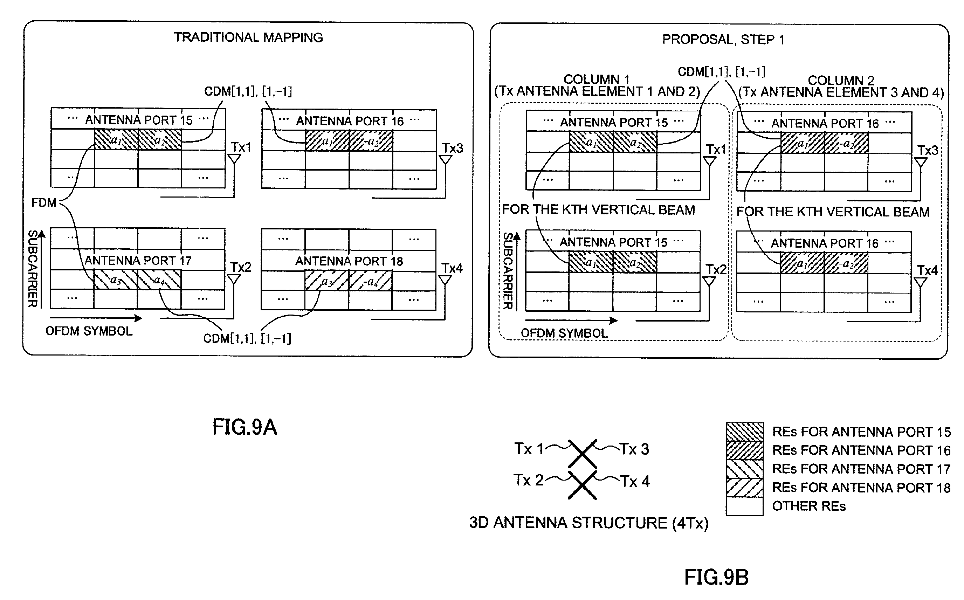

First, FIG. 9A shows a case where, when 3D beam forming is employed, the same number of antenna ports as the number of antenna elements are provided (mapping using conventional mechanisms). FIG. 9A shows a case where the number of antenna ports (four) is set to be the same as the number of antenna elements, and where reference signals are mapped to the radio resources to which each antenna port corresponds. In this case, the transmitting antenna elements are each assigned to a predetermined antenna port. Consequently, in FIG. 9A, four antenna elements are used, so that four antenna ports are required.

Note that, in FIG. 9A, the antenna port 15 and the antenna port 16 are code-division-multiplexed (CDM) over the same resource elements, and the antenna port 17 and the antenna port 18 are code-division-multiplexed (CDM) over the same resource elements. Also, the antenna port 15 and the antenna port 17 are frequency-division-multiplexed (FDM) over the same resource elements, and the antenna port 16 and the antenna port 18 are frequency-division-multiplexed (FDM) over the same resource elements.

Also, each antenna port is assigned to a specific frequency-domain/time-domain resource element set (for example, two resource elements that are consecutive in the time direction). Note that, in FIG. 9, "aₓ" represents the reference signal symbols of the resource elements corresponding to the antenna ports.

As shown in FIG. 9A, when reference signals are mapped by providing the same number of antenna ports as the number of antenna elements, the overhead of CSI-RSs increases following the increase of the number of antenna elements.

Consequently, with the present embodiment, the radio base station assigns a predetermined antenna port to the reference signal symbols in a plurality of antenna elements constituting a vertical antenna element sequence (or a horizontal antenna element sequence) that serves as the vertical beam (or horizontal beam) forming unit. For example, as shown in FIG. 9B, the same antenna port is assigned to a plurality of antenna elements that constitute a predetermined vertical antenna element sequence, and the reference signals are mapped to the same resource elements.

FIG. 9B shows a method of mapping CSI-RSs for predetermined vertical beams (for example, the k-th vertical beam). To be more specific, for the k-th vertical beam, the same antenna port (here, the antenna port 15) is assigned to the antenna elements Tx 1 and Tx 2 constituting the vertical antenna element sequence 1 (column 1). Likewise, the same antenna port (here, the antenna port 16) is assigned to the antenna elements Tx 3 and Tx 4 constituting the vertical antenna element sequence 2 (column 2). In this case, two antenna ports are needed for one vertical beam.

Also, the CSI-RSs in each antenna element corresponding to one vertical beam can be allocated to radio resources that are the same in the frequency domain and time domain. In this case, the reference signals for the antenna port 15 and the antenna port 16 are code-division-multiplexed (CDM).

In the case illustrated in FIG. 9B, different antenna ports are assigned per vertical antenna element sequence. Note that the method of generating reference signals, the method of determining mapping positions and so on may use the LTE-A system mechanisms that have been provided for heretofore. Also, the mapping positions may be reported from the radio base station to user terminals, and therefore can be shared by both.

Also, the total number of antenna ports to apply to one vertical beam is preferably made equal to or less than the number of horizontal antenna elements (the number of antenna elements to constitute one horizontal antenna element sequence).

Also, the antenna ports for reference signals that are pre-coded for one vertical beam (or horizontal beam) can be orthogonalized by using one of time division multiplexing (TDM), frequency division multiplexing (FDM) and code division multiplexing (CDM), or by combining these.

Also, the antenna ports for reference signals that are pre-coded for a plurality of vertical beams (or horizontal beams) can be orthogonalized by using one of time division multiplexing (TDM), frequency division multiplexing (FDM) and code division multiplexing (CDM), or by combining these, or can be orthogonalized in a quasi-orthogonal manner.

In this way, when a plurality of antenna elements constitute the same vertical antenna element sequence (or horizontal antenna element sequence), even if the number of antenna elements increases, it is still possible reduce the increase of the number of antenna ports by assigning the reference signals for a predetermined vertical beam (or horizontal beam) to the same antenna port (mapping to the same radio resources).

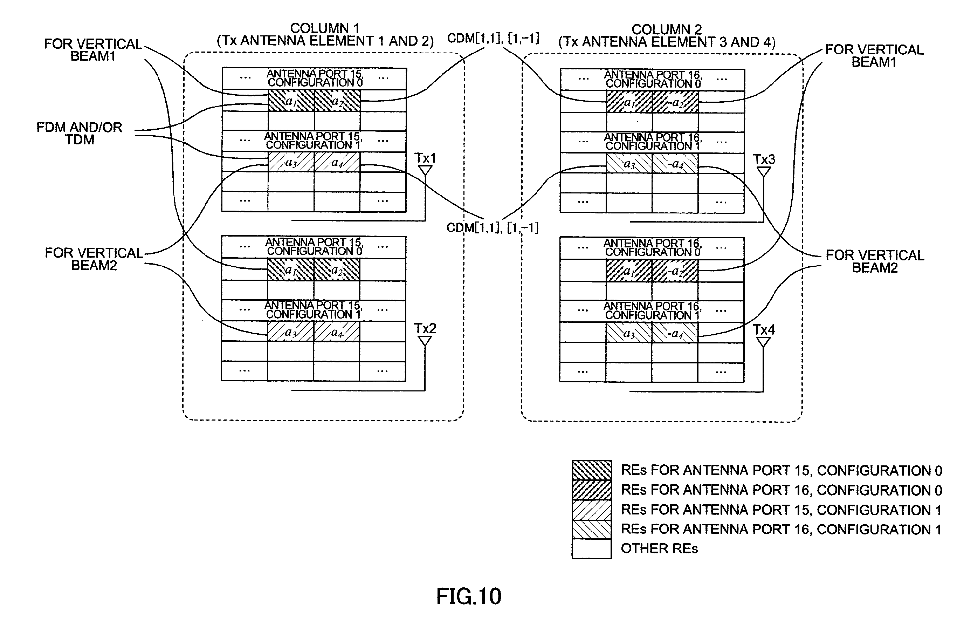

Next, an example of a CSI-RS mapping method when two vertical beams are formed will be described with reference to FIG. 10.

In this case, in each vertical antenna element sequence (column), the radio base station assigns the same antenna port to the reference signals in each antenna element, and maps these reference signals to different radio resources per vertical beam.

To be more specific, for the vertical beam 1, the radio base station maps the CSI-RSs that correspond to the antenna elements Tx 1 and Tx 2, constituting the vertical antenna element sequence 1 (column 1), to the same antenna port 15 (the same radio resources). Similarly, for the vertical beam 1, the radio base station maps the CSI-RSs that correspond to the antenna elements Tx 3 and Tx 4, constituting the vertical antenna element sequence 2 (column 2), to the same antenna port 16 (the same radio resources).

Also, for the vertical beam 2, the radio base station maps the CSI-RSs that correspond to the antenna elements Tx 1 and Tx 2, constituting the vertical antenna element sequence 1 (column 1), to the same antenna port 15 (one radio resource that is different from the vertical beam 1). Similarly, for the vertical beam 2, the radio base station maps the CSI-RSs that correspond to the antenna elements Tx 3 and Tx 4, constituting the vertical antenna element sequence 2 (column 2), to the same antenna port 16 (one radio resource that is different from the vertical beam 1). In the case illustrated in FIG. 10, two antenna ports are needed for each vertical beam.

Also, the reference signals of the antenna port 15 and the antenna port 16 are code-division-multiplexed (CDM). Also, in each vertical beam element sequence (column), CSI-RSs for different vertical beams are frequency-division-multiplexed (FDM) and/or time-division-multiplexed (TDM) with each other. Here, a case is shown where, in the vertical antenna element sequence 1 (column 1), the reference signals for the vertical beam 1 and the reference signals for the vertical beam 2 are frequency-division-multiplexed (FDM).

To control the mapping patterns of reference signals, for example, as defined in LTE Rel-10, it is possible to apply one of a plurality of CSI configurations (configurations 0 to 9) to the reference signals for different vertical beams. For example, in FIG. 10, it is possible to apply a CSI configuration (configuration 0) to the reference signals for the vertical beam 1, and apply a CSI configuration (configuration 1) to the reference signals for the vertical beam 2.

As shown in FIG. 10, by associating a plurality of antenna elements constituting the same vertical antenna element sequence (or horizontal antenna element sequence) with the same antenna port and mapping reference signals, it is possible to reduce the increase of the number of antenna ports even when the number of antenna elements increases.

### <Precoding Process>

Next, a case will be described where reference signals that are mapped by the above mapping method are subjected to a precoding process.

The radio base station performs the precoding process of reference signals that are mapped to antenna ports (antenna port mapping). For example, the precoding process for the reference signals corresponding to each vertical beam (for example, the k-th vertical beam) is performed using the vertical precoder (W_{V}^{[K]}) that forms that vertical beam (the k-th vertical beam). Also, in each vertical antenna element sequence, the radio base station multiplies a plurality of reference signals that are mapped to a predetermined antenna port (the same radio resources) by different weighting coefficients (weights) of a vertical precoder W_{V} that forms a predetermined vertical beam.

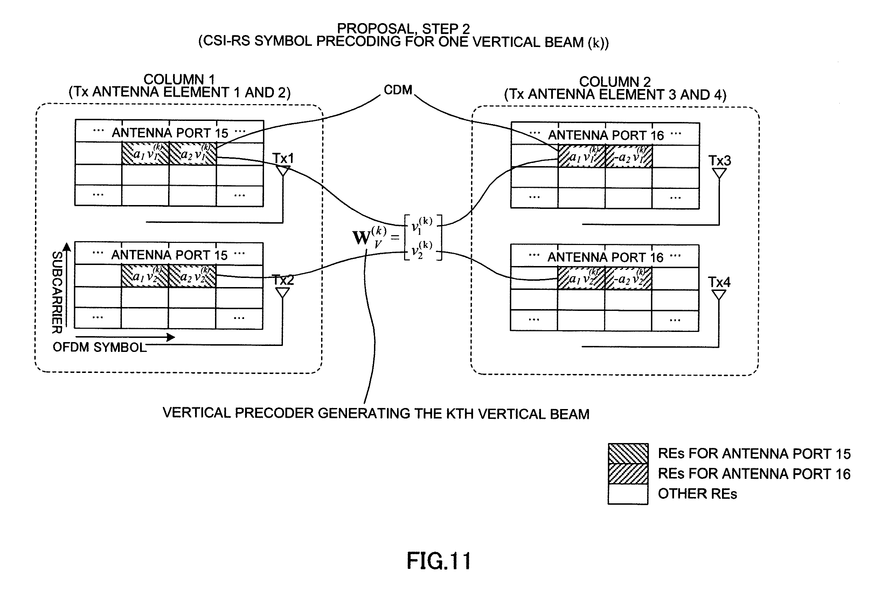

For example, as shown in FIG. 11, in each vertical antenna element sequence (column), the reference signals for each antenna element for a predetermined vertical beam are multiplied by the weights in the precoder that forms that predetermined vertical beam. In FIG. 11, in the precoding process, the reference signals are multiplied by varying weights (weighting coefficients) that are included in the vertical precoder (Wᵥ^{(k)}) that is used to form a predetermined vertical beam (here, the k-th vertical beam). The weight by which each reference signal is multiplied can be made one coefficient among vertical precoders or weighting vectors.

Note that the vertical precoder (or horizontal precoder) to generate one vertical beam (or horizontal beam) may be determined using a cell-specific codebook that is determined in advance. In this case, the radio base station can determine the precoder (W) based on the communication environment of the cell.

Referring to FIG. 11, in column 1, the radio base station multiplies the reference signals in the antenna element Tx 1 by ν₁^{(k)} of Wᵥ^{(k)}, and multiplies the reference signals in the antenna element Tx 2 by ν₂^{(k)} of Wᵥ^{(k)}. Also, in column 2, the reference signals corresponding to the antenna element Tx 3 are multiplied by ν₁^{(k)} of Wᵥ^{(k)}, and the reference signals corresponding to the antenna element Tx 2 are multiplied by ν₂^{(k)} of Wᵥ^{(k)}.

In this way, even when, in each vertical antenna element sequence (column), the same antenna port is assigned to varying antenna elements and reference signals are mapped, it still becomes possible to adequately distinguish between the reference signals by multiplying the reference signals by different weights.

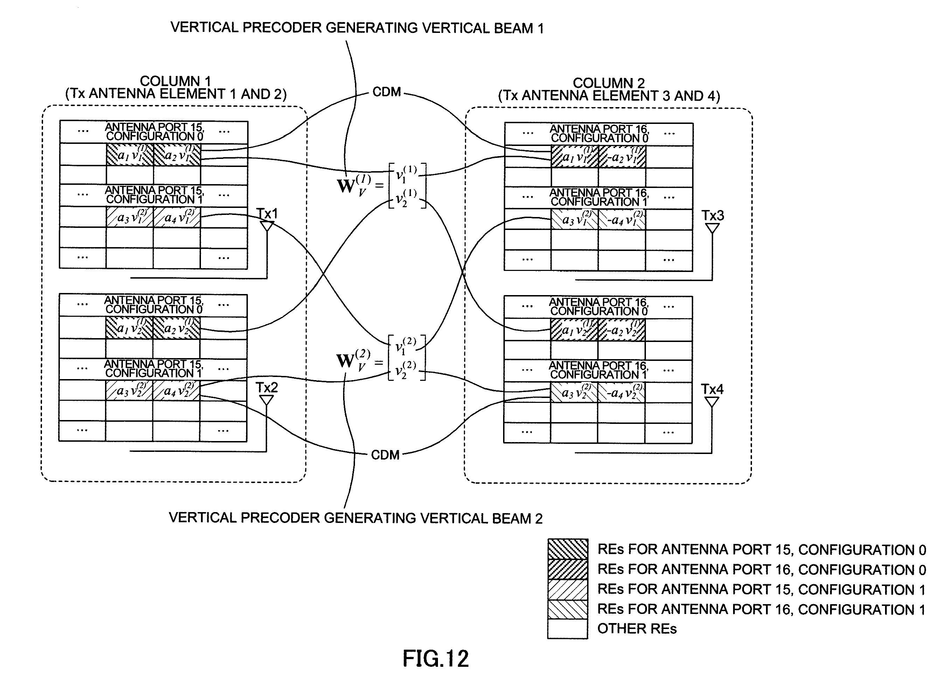

Next, a case in which the precoding process is performed for reference signals corresponding to two vertical beams will be described with reference to FIG. 12.

In column 1, the radio base station multiplies the two reference signals for vertical beam 1, mapped to the same resource elements (antenna port 15), by varying weights (ν₁⁽¹⁾ and ν₂⁽¹⁾ included in the precoder (Wᵥ⁽¹⁾ for vertical beam 1, respectively. Also, in column 1, the two reference signals for vertical beam 2, mapped to the same resource elements (antenna port 15), are multiplied by varying weights (ν₁²) and ν₂⁽²⁾ included in the precoder (Wᵥ⁽²⁾) for vertical beam 2, respectively.

Likewise, in column 2, the radio base station multiplies the reference signals for the vertical beam 1 corresponding to the antenna element Tx 3 by ν₁⁽¹⁾ of Wᵥ⁽¹⁾, and multiplies the reference signals for the vertical beam 1 corresponding to the antenna element Tx 4 by ν₂⁽¹⁾ of Wᵥ⁽¹⁾. Also, the reference signals for the vertical beam 2 corresponding to the antenna element Tx 3 are multiplied by ν₁⁽²⁾ of Wᵥ⁽²⁾, and the reference signals for the vertical beam 2 corresponding to the antenna element Tx 4 are multiplied by ν₂⁽²⁾ of Wᵥ⁽²⁾.

Note that the reference signals for the antenna port 15 and the antenna port 16 are code-division-multiplexed (CDM).

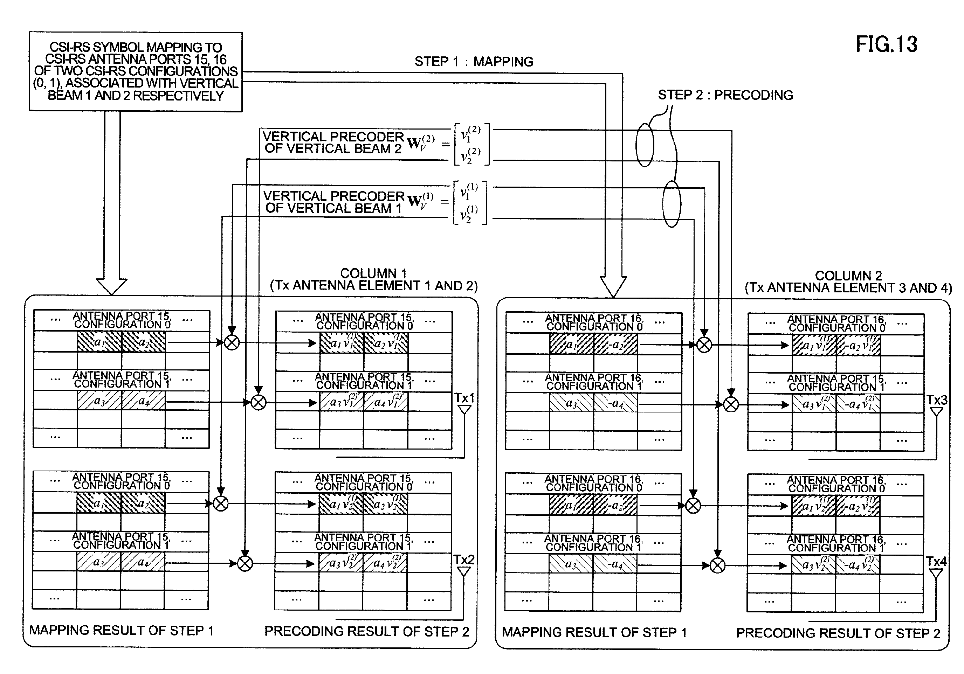

An overall flow of the above mapping step (step 1) and precoding process step (step 2) is shown in FIG. 13. FIG. 13 shows a case where CSI-RS symbols are mapped to the antenna ports 15 and 16, where two CSI-RS configurations are applied in association with the vertical beams 1 and 2, respectively.

In step 1, in each vertical antenna element sequence (column), the same antenna port is assigned to a plurality of antenna elements that form each vertical beam (here, the vertical beam 1 and the vertical beam 2), and also, in each column, the reference signals for each vertical beam are allocated to different resources (here, in configurations 0 and 1). Then, in step 2, the reference signals of a predetermined vertical beam mapped to the same resources in one column are multiplied by the weights constituting the precoder that forms that vertical beam.

Note that, although a case has been described with the above description where reference signals corresponding to the antenna elements that constitute a vertical antenna element sequence (column) are assigned to the same antenna port and furthermore multiplied by varying weights, the above example is equally applicable even if the antenna elements are replaced with antenna elements to constitute horizontal antenna element sequences (rows).

### <Application to CRS>

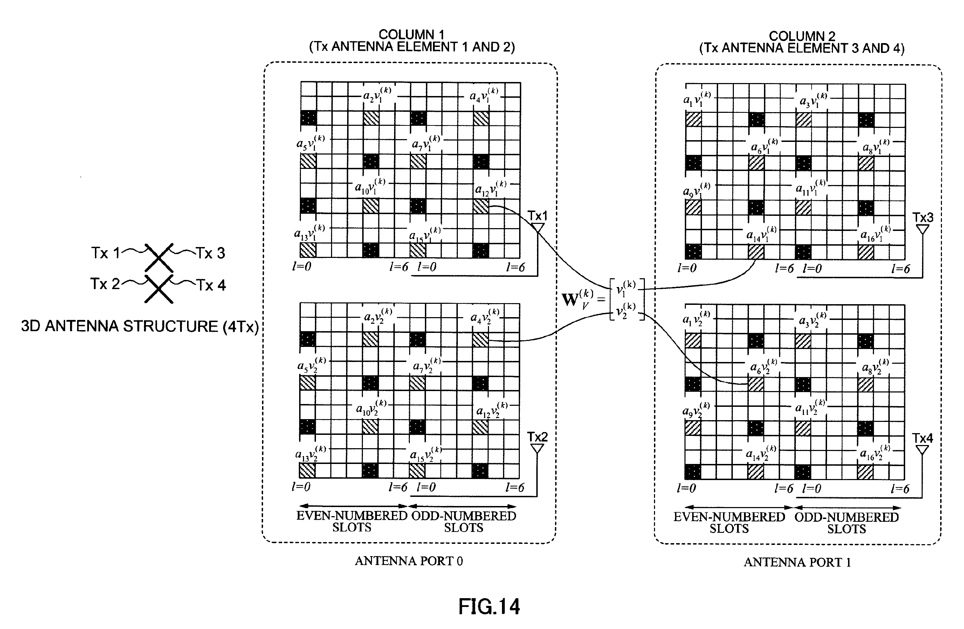

Although the above description has been given with reference to an example using CSI-RSs as reference signals, the present embodiment is equally applicable to other reference signals (for example, CRSs) as well. FIG. 14 shows a case where the present embodiment is applied to CRSs. FIG. 14 shows a case where the same antenna port is assigned a plurality of antenna elements constituting a vertical antenna element sequence (each column), and CRSs are mapped to the same resources.

To be more specific, the radio base station maps the CRSs of the antenna elements Tx 1 and Tx 2 constituting the column 1 to resource elements of the antenna port 0, and also multiplies the CRSs of the antenna element Tx 1 by ν₁^{(k)} of the precoder (Wᵥ^{(k)}) that forms the k-th vertical beam, and multiplies the CRSs of the antenna element Tx 2 by ν₂^{(k)} of Wᵥ^{(k)}. Similarly, the CRSs of the antenna elements Tx 3 and Tx 4 constituting the column 2 are mapped to resource elements of the antenna port 1, and also the CRSs of the antenna element Tx 3 are multiplied by ν₁^{(k)} of Wᵥ^{(k)}, while the CRSs of the antenna element Tx 4 are multiplied by ν₂^{(k)} of Wᵥ^{(k)}.

In this way, by associating a plurality of antenna elements that constitute the same vertical antenna element sequence (or horizontal antenna element sequence) with the same antenna port and mapping reference signals, it is possible to reduce the increase of the number of antenna ports even when the number of antenna elements increases.

Note that, although a case has been described with reference to FIG. 14 where reference signals corresponding to the antenna elements constituting a vertical antenna element sequence (column) are assigned to the same antenna port and furthermore multiplied by varying weights, the above example is equally applicable even if the antenna elements are replaced with antenna elements to constitute horizontal antenna element sequences (rows).

### <Reference Signal Transmission Steps>

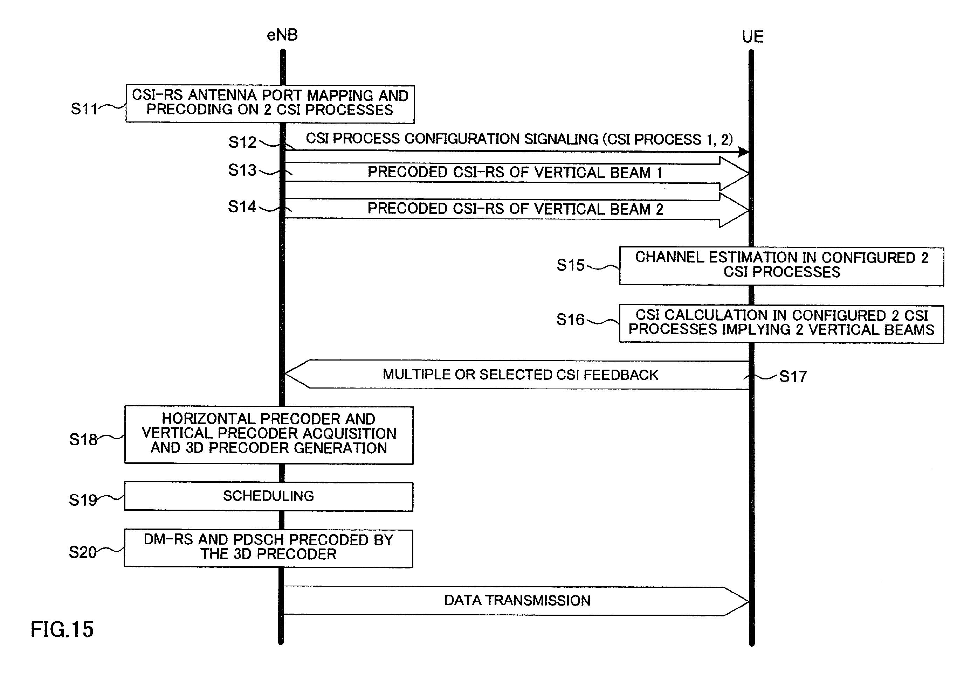

Next, using FIG. 15, an example of the steps of transmitting channel state information between a radio base station and a user terminal according to the present embodiment will be described. Note that FIG. 15 shows a case where two (K=2) vertical beams are formed.

First, the radio base station eNB sets K CSI processes for K (here, K=2) pre-coded CSI-RSs (step S11). Each pre-coded CSI-RS corresponds to a predetermined vertical beam. Following this, the radio base station reports CSI process information to the user terminal UE (step S12), and transmits the pre-coded CSI-RSs corresponding to each vertical beam (step S13 and S14). Here, the CSI process information is information that relates to the K CSI processes that correspond to K vertical beams respectively, and refers to, for example, the number of CSI-RS processes, the corresponding antenna ports, and so on. The CSI process information is reported from the radio base station to the user terminal by, for example, higher layer signaling such as RRC signaling.

The user terminal UE performs channel estimation for each vertical beam (CSI process) (step S15), and, after that, calculates CSI for each vertical beam (CSI process) (step S16). To be more specific, the user terminal UE calculates the PMI_{H}^{(k)}'s, RI_{H}^{(k)}'s and CQI_{H}^{(k)}'s (k=1, ..., K) of the K horizontal channels formed respectively by the K vertical beams. Here, the PMI_{H}^{(k)} is the precoding matrix indicator of the horizontal channel formed by the k-th vertical beam, and identifies the precoding weight used in the horizontal precoder. Also, the RI_{H}^{(k)} is the rank indicator of the horizontal channel formed by the k-th vertical beam. Furthermore, the CQI_{H}^{(k)} is the channel quality indicator of the horizontal channel formed by the k-th vertical beam.

Next, the user terminal UE feeds back the CSIs of the vertical beams (CSI processes) to the radio base station eNB (step S17). When feeding back the CSIs, the user terminal may feed back the CSIs of all vertical beams (CSI processes) (the PMIs and CQIs of the horizontal channels), or may select and feed back the CSIs of predetermined vertical beams (for example, those of M vertical beams of good received quality) from among the CSIs of the K vertical beams (CSI processes).

The radio base station eNB determines the horizontal precoder and the vertical precoder based on the CSIs of the vertical beams (CSI processes) that have been fed back, and selects the vertical beam to use in downlink MIMO transmission (step S18), and carries out scheduling and precoding (steps S19 and S20). To be more specific, the radio base station eNB determines the vertical precoder W_{V} and the horizontal precoder W_{H} based on the CSIs that have been fed back (PMI_{H} and PMI_{V}), and generates DM-RSs and the 3D precoders for data transmission.

### (Configuration of Radio Communication System)

Now, a radio communication system according to the present embodiment will be described in detail.

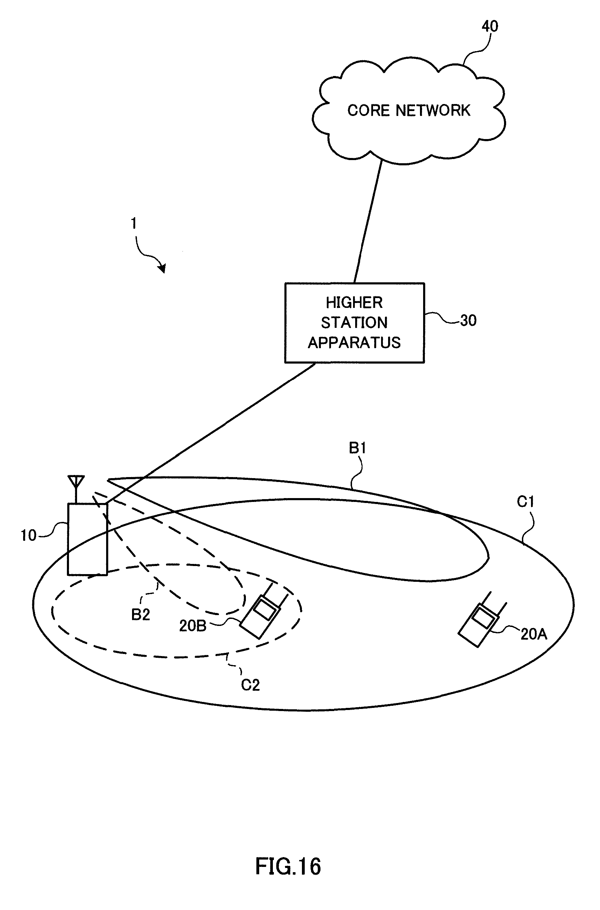

FIG. 16 is a diagram to explain a system configuration of a radio communication system according to the present embodiment. Note that the radio communication system 1 shown in FIG. 16 is a system to accommodate, for example, the LTE system or SUPER 3G. This radio communication system may execute carrier aggregation, whereby a plurality of component carriers, which are the system band of the LTE system, are aggregated. Also, this radio communication system may be referred to as LTE-advanced (LTE-A), IMT-advanced, 4G and so on.

As shown in FIG. 16, the radio communication system 1 is configured to include a radio base station 10 and user terminals 20A and 20B that communicate with the radio base station 10. The radio base station 10 is connected with a higher station apparatus 30, and this higher station apparatus 30 is connected with a core network 40. The higher station apparatus 30 may be, for example, a gateway (GW), a mobility management entity (MME) and so on, but is by no means limited to this.

As shown in FIG. 16, the radio base station 10 outputs 3D beams B1 and B2 that are formed by combining a horizontal beam having horizontal directivity and a vertical beam having vertical directivity. In FIG. 16, a plurality of 3D beams B1 and B2, having varying directivities in the vertical direction, form a plurality of sectors (an inner cell C1 and an outer cell C2). To be more specific, the 3D beam B1 having a small tilt angle forms the outer cell C1 that is distant from the radio base station 10. Meanwhile, the 3D beam B2 having a large tilt angle forms the inner cell C2 that is near the radio base station 10. Note that the tilt angle is the angle of beams with respect to the horizontal direction (for example, the ground).

In FIG. 16, the user terminal 20A that is located in the outer cell C1 carries out downlink communication with the radio base station 10 using the 3D beam B1. Also, the user terminal 20B located in the inner cell C2 carries out downlink communication with the radio base station 10 using the 3D beam B2. MIMO transmission is used in this downlink communication. The user terminals 20A and 20B may be either LTE terminals or LTE-A terminals, as long as they are user equipment (UE), which covers both mobile terminals and fixed terminals. The user terminals 20A and 20B hereinafter will be referred to as "user terminal 20," unless specified otherwise.

Note that, for radio access schemes in the radio communication system 1 shown in FIG. 16, OFDMA (Orthogonal Frequency Division Multiple Access) is adopted on the downlink, and SC-FDMA (Single-Carrier Frequency Division Multiple Access) is adopted on the uplink, but the uplink radio access scheme is by no means limited to this.

Downlink communication channels include a PDSCH (Physical Downlink Shared Channel), which is shared between the user terminals 20, and downlink L1/L2 control channels (PDCCH, PCFICH and PHICH). Transmission data and higher control information are transmitted by the PDSCH. Scheduling information (DL grants and UL grants) for the PDSCH and the PUSCH, and so on are transmitted by the PDCCH (Physical Downlink Control CHannel). Note that an enhanced PDCCH (also referred to as "E-PDCCH," "ePDCCH," "UE-PDCCH" and so on) that is frequency-division-multiplexed with the PDSCH may be provided to solve the shortage of capacity with the PDCCH.

Uplink communication channels include a PUSCH (Physical Uplink Shared Channel), which is shared between the user terminals 20 as an uplink data channel, and a PUCCH (Physical Uplink Control Channel), which is an uplink control channel. By means of this PUSCH, transmission data and higher control information are transmitted. Also, downlink channel state information (CSI), delivery acknowledgment information (ACK/NACK/DTX) and so on are transmitted by the PUCCH. Note that the channel state information (CSI) and delivery acknowledgment information (ACK/NACK/DTX) may be transmitted by the PUSCH as well.

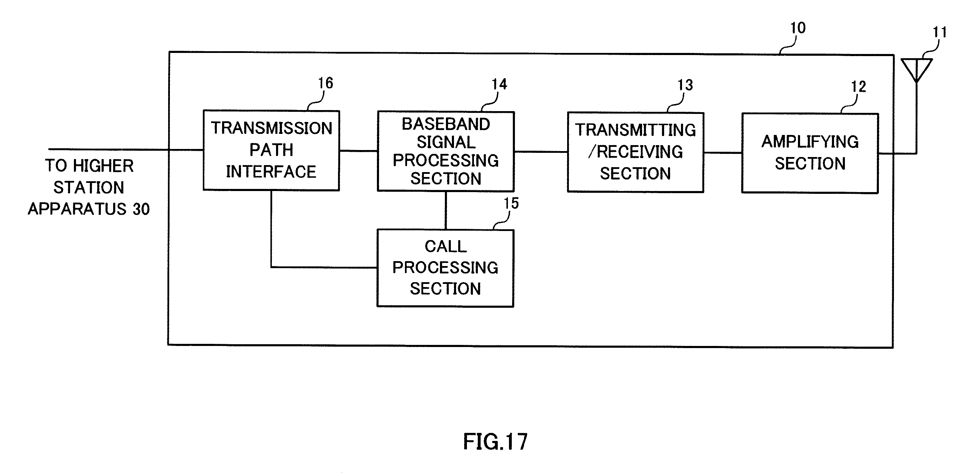

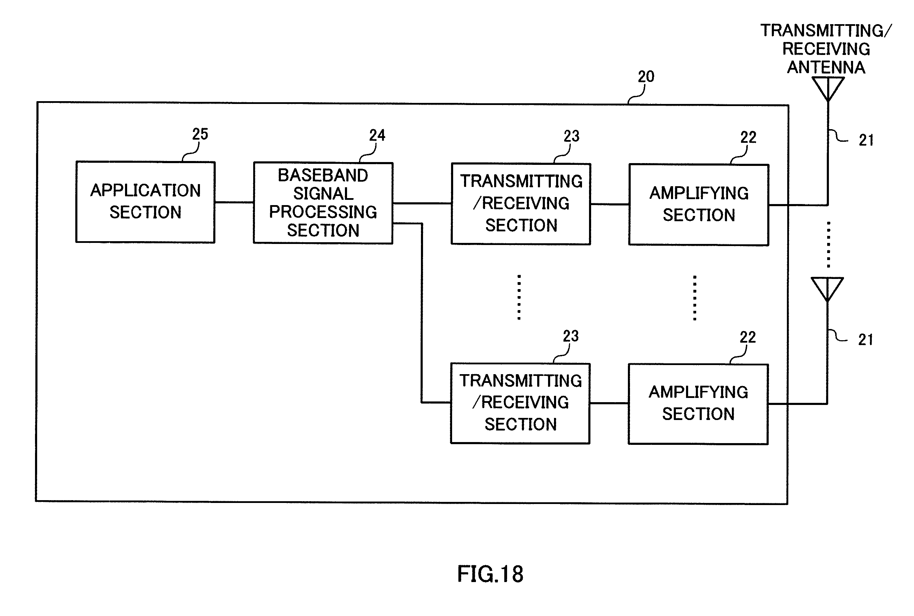

Next, overall configurations of the radio base station and user terminals according to the present embodiment will be described with reference to FIG. 17 and 18.

FIG. 17 is a diagram to show an overall configuration of the radio base station according to the present embodiment. As shown in FIG. 17, the radio base station 10 has a transmitting/receiving antenna 11 (antenna section), an amplifying section 12, a transmitting/receiving section 13, a baseband signal processing section 14, a call processing section 15, and a transmission path interface 16. Note that, as shown in FIG. 6, the transmitting/receiving antenna 11 is formed with a 3D antenna in which antenna elements are aligned in both the horizontal domain and the vertical domain. To be more specific, the transmitting/receiving antenna 11 has horizontal antenna element sequences that are each formed with a plurality of antenna elements that serve as a horizontal beam forming unit, and vertical antenna element sequences that are each formed with a plurality of antenna elements that serve as a vertical beam forming units.

Downlink data for the user terminal 20 is input from the higher station apparatus 30, into the baseband signal processing section 14, via the transmission path interface 16. In the baseband signal processing section 14, signal transmission processes are executed with respect to the downlink data, including HARQ retransmission control, scheduling, transport format selection, channel coding, precoding, mapping to radio resources, an inverse fast Fourier transform (IFFT), and so on.

Also, in the baseband signal processing section 14, signal transmission processes are carried out also with respect to downlink control data (for example, DCI), including channel coding, mapping to radio resources, an IFFT and so on. Furthermore, for broadcast information provided by broadcast channels and reference signals (CRSs, CSI-RSs, DM-RSs and so on), too, signal transmission processes such as mapping to radio resources, an IFFT and so on are carried out.

The transmitting/receiving section 13 converts baseband signals, which are pre-coded and output from the baseband signal processing section 14 per antenna element (see FIG. 6) in the transmitting/receiving antenna 11, into a radio frequency band. The amplifying section 122 amplifies the radio frequency signals subjected to frequency conversion, and output the results through the transmitting/receiving antennas 111.

Meanwhile, as for uplink data from the user terminal 20, each radio frequency signal that is received in the transmitting/receiving antenna 11 is amplified in the amplifying section 12, and converted into a baseband signal through frequency conversion in the transmitting/receiving section 13, and input in the baseband signal processing section 14.

In the baseband signal processing section 14, the uplink data that is included in the input baseband signals is subjected to signal receiving processes such as a fast Fourier transform (FFT), an inverse discrete Fourier transform (IDFT) and error correction decoding, and transferred to the higher station apparatus 30 via the transmission path interface 16. The call processing section 15 performs call processing such as setting up and releasing communication channels, manages the state of the radio base station 10 and manages the radio resources.

FIG. 18 is a diagram to show an overall configuration of a user terminal according to the present embodiment. As shown in FIG. 18, the user terminal 20 has a plurality of transmitting/receiving antennas 21, a plurality of amplifying sections 22, transmitting/receiving sections 23, a baseband signal processing section 24, and an application section 25.

As for downlink signals from the radio base station 10, radio frequency signals received in the transmitting/receiving antennas 21 are each amplified in the amplifying sections 22, and converted into baseband signals through frequency conversion in the transmitting/receiving sections 23. The baseband signals are subjected to signal receiving processes such as FFT and error correction decoding in the baseband signal processing section 24. In the downlink signals, downlink user data is transferred to the application section 25 and subjected to processes related to higher layers.

Meanwhile, uplink data for the radio base station 10 is input from the application section 25 into the baseband signal processing section 24. In the baseband signal processing section 24, signal transmission processes such as HARQ retransmission control, channel coding, precoding, a DFT and an IFFT are carried out, and the results are forwarded to each transmitting/receiving sections 23. The baseband signals output from the baseband signal processing section 24 are converted into a radio frequency band in the transmitting/receiving sections 23. After that, the radio frequency signals that have been subjected to frequency conversion are amplified in the amplifying sections 22 and transmitted from the transmitting/receiving antennas 21.

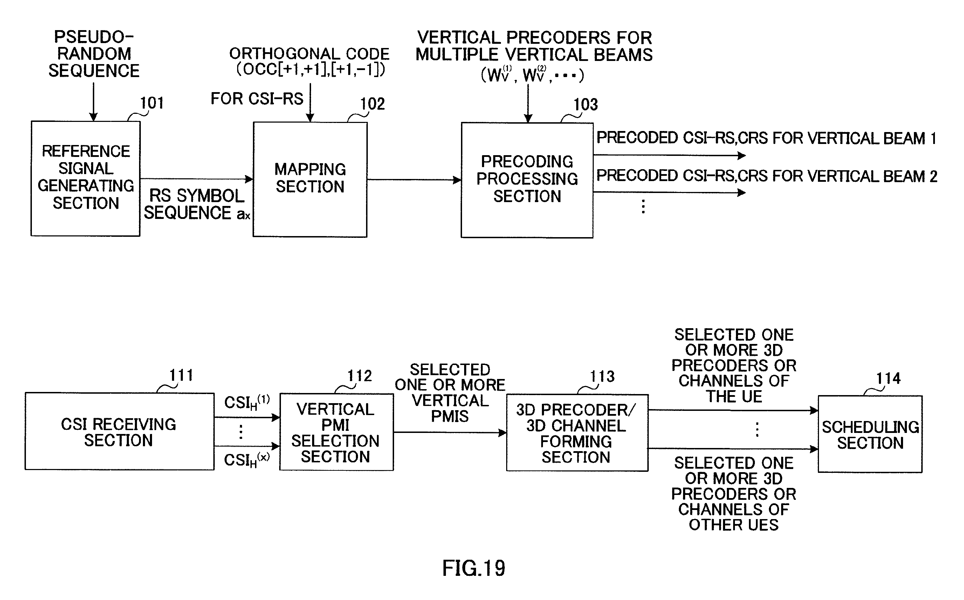

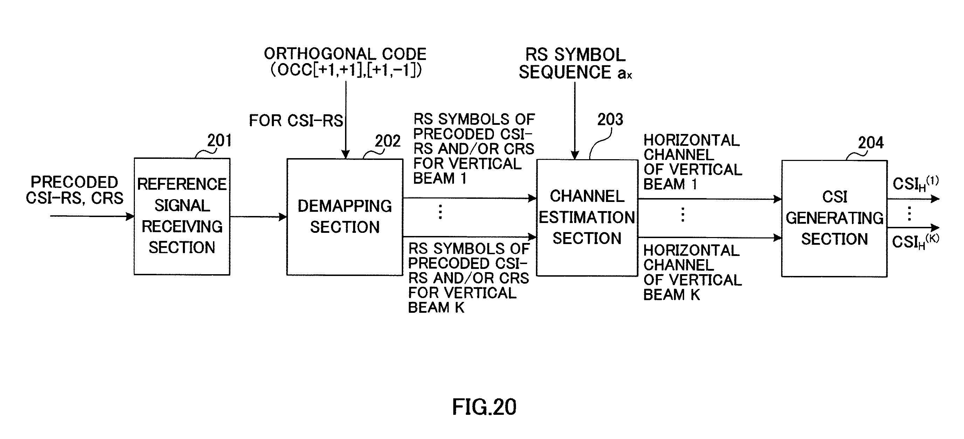

Next, the configurations of the radio base station and user terminal according to the present embodiment will be described in detail with reference to FIG. 19 and 20. Note that, although FIG. 19 and FIG. 20 show functional configurations pertaining to CSI-RS (or CRS) transmission and CSI feedback, other functional configurations may be provided as well. Also, the functional configurations shown in FIG. 19 are primarily provided in the baseband signal processing section 14 of FIG. 17. Similarly, the functional configurations shown in FIG. 20 are primarily provided in the baseband signal processing section 24 of FIG. 18.

FIG. 19 is a diagram to show the functional configurations of the radio base station according to the present embodiment. As shown in FIG. 19, the radio base station 10 has a reference signal generating section 101, a mapping section 102 and a precoding processing section 103, which primarily have transmission processing functions, and a CSI receiving section 111 (receiving section), a vertical PMI selection section 112 (selection section), a 3D precoder/3D channel forming section 113 and a scheduling section 114, which primarily have receiving processing functions.

The reference signal generating section 101 generates measurement reference signals such as CSI-RSs, CRSs and so on. For example, the reference signal generating section 101 generates reference signal sequences based on pseudo-random coefficients and modulates them.

The mapping section 102 maps the reference signal sequences to radio resources corresponding to a predetermined antenna port. For example, as shown in FIG. 9B and FIG. 10, the mapping section 102 assigns the same antenna port to reference signals that respectively correspond to a plurality of antenna elements constituting the same horizontal antenna element sequence or to a plurality of antenna elements constituting the same vertical antenna element sequence.

Also, when a plurality of vertical beams (or horizontal beams) are formed in each vertical antenna element sequence (or in each horizontal antenna element sequence), the mapping section 102 can map the reference signals corresponding to the antenna elements associated with the same vertical beam (or horizontal beam) to the same frequency domain and time domain resource elements. That is, in the same vertical antenna element sequence, reference signals (for example, CSI-RSs) are mapped to different resources elements per vertical beam.

Also, in each vertical antenna element sequence (or in each horizontal antenna element sequence), among the reference signals corresponding to each antenna element, the mapping section 102 frequency-division-multiplexes (FDM) and/or time-division-multiplexes (TDM) the reference signals for different vertical beams and map them to different radio resources.

Also, the mapping section 102 can code-division-multiplex (CDM) the reference signals that respectively correspond to the antenna elements of different vertical antenna element sequences in CSI-RSs, by using orthogonal codes (OCCs). By this means, when, as shown in FIG. 9B, the reference signals in each antenna element for the k-th beam are mapped to the same radio resources, the reference signals of the vertical antenna element sequence 1 and the vertical antenna element sequence 2 are code-division-multiplexed (CDM).

The precoding processing section 103 performs the precoding process of each reference signal. For example, the precoding processing section 103 performs the precoding process using different precoders (Wᵥ⁽¹⁾, Wᵥ⁽²⁾, ... Wᵥ^{(K)}) on a per vertical beam basis. Also, in each vertical antenna element sequence, the precoding processing section 103 multiplies the reference signal in each antenna element by varying weighting coefficients in the precoder for a predetermined vertical beam.

For example, as shown in above FIG. 11, in the vertical antenna element sequence 1, the precoding processing section 103 multiplies the reference signals in each antenna element (Tx 1 and Tx 2), for the k-th vertical beam, by varying weighting coefficients (ν₁^{(k)} and ν₂(^{k)}) in the precoder (Wᵥ^{(K)}) that forms the k-th vertical beam. The reference signals (CSI-RSs and CRSs) that are pre-coded for each vertical beam are transmitted to the user terminal.

The CSI receiving section 111 receives channel state information (CSI_{H}'s) that is fed back from the user terminal 20. These CSI_{H}'s indicate the states of the horizontal domain channels (horizontal channels) formed by the vertical beams. The CSI_{H}'s include precoding matrix indicators (PMI_{H}'s) that identify the precoding weights of the horizontal channels, rank indicators (RI_{H}'s) that identify the ranks of the horizontal channels, and channel quality indicators (CQI_{H}'s) that identify the channel quality of the horizontal channels.

To be more specific, the CSI receiving section 122 receives the CSI_{H}⁽¹⁾ ... CSI_{H}^{(x)} (x=K) of K horizontal channels formed by K (K≥1) vertical beams.

Based on the CSI_{H}'s input from the CSI receiving section 111, the vertical PMI selection section 112 selects the PMIs (vertical PMIs) for forming the vertical beams to use in downlink communication with the user terminal 20. To be more specific, the vertical PMI selection section 112 selects the vertical PMIs that indicate these precoding weights. The vertical PMIs (PMIᵥ's) are selected by using, for example, the CQI_{H}⁽¹⁾ ... CQI_{H}^{(x)} that are included in the CSI_{H}⁽¹⁾ ... CSI_{H}^{(x)}, and a predetermined function (for example, argmax).

The 3D precoder/3D channel forming section 113 executes precoding by means of vertical precoders, using the vertical PMIs selected in the vertical PMI selection section 112, and forms vertical beams. Also, the 3D precoder/3D channel forming section 113 executes precoding by means of horizontal precoders, and forms horizontal beams. 3D channels are formed with the vertical beams and the horizontal beams that are formed.

The scheduling section 114 carries out scheduling based on input information from the 3D precoder/3D channel forming section 113.

FIG. 20 is a diagram to show the functional configurations of the user terminal according to the present embodiment. As shown in FIG. 20, the user terminal 20 has a reference signal receiving section 201 for CSI-RSs, CRSs and so on, a demapping section 202, a channel estimation section 203, and a CSI generating section 204.

The reference signal receiving section 201 receives channel state measurement reference signals (CSI-RSs) that are pre-coded using different precoding weights on a per vertical beam basis. To be more specific, the reference signal receiving section 201 receives K pre-coded CSI-RSs, based on CSI process information related to K CSI processes in association with K (K≥1) vertical beams.

The demapping section 202 demaps the multiplexed CSI-RSs and/or antenna ports in order to measure the pre-coded reference signals. Also, the CSI-RSs that are code-division-multiplexed (CDM) are separated using orthogonal codes (OCCs). Then, the demapping section 202 outputs the pre-coded reference signals of CSI-RSs and/or CRSs for each vertical beam, to the channel estimation section 203.

The channel estimation section 203 executes channel estimation based on the pre-coded reference signal symbols for each vertical beam, output from the demapping section 202. To be more specific, based on K pre-coded CSI-RS symbols output from the demapping section 202, the channel estimation section 203 estimates K horizontal domain channels (horizontal channels) that are formed by K vertical beams (CSI processes) respectively. A horizontal channel refers to a 2D channel in the horizontal domain that is formed by a vertical beam.

The CSI generating section 204 generates channel state information (CSI) of the horizontal channels estimated in the channel estimation section 203. To be more specific, the CSI generating section 204 generates the CSI_{H}⁽¹⁾ ... CSI_{H}^{(K)} of the K horizontal channels that are formed by the K vertical beams respectively. Note that the CSI_{H}⁽¹⁾ ... CSI_{H}^{(K)} include the PMI_{H}⁽¹⁾ ... PMI_{H}^{(K)}, the RI_{H}⁽¹⁾ ... RI_{H}^{(K)}, and the CQI_{H}⁽¹⁾ ... CQI_{H}^{(K)}. Then, the CSI_{H}'s generated in the CSI generating section 204 are fed back to the radio base station.

The present invention is by no means limited to the above embodiment and can be implemented in various modifications. For example, it is possible to adequately change the number of carriers, the bandwidth of the carriers, the signaling method, the number of processing sections, the process steps and so on in the above description, without departing from the scope of the present invention. Also, in the above embodiment, the configurations that can be applied to vertical antenna element sequences (columns) are likewise applicable to horizontal antenna element sequences (rows) as well. Besides, the present invention can be implemented with various changes, without departing from the scope of the present invention.

The disclosure of Japanese Patent Application No. 2012-197746, filed on September 7, 2012, including the specification, drawings and abstract, is incorporated herein by reference in its entirety.

## Claims

1. A radio base station comprising:
an antenna section that forms a 3D beam that is formed with a horizontal beam having directivity in a horizontal plane and a vertical beam having directivity in a vertical plane;
a mapping section that maps reference signals in association with predetermined antenna ports; and
a precoding processing section that carries out a precoding process of the reference signals, wherein:
the antenna section comprises a horizontal antenna element sequence, which is formed with a plurality of antenna elements and which serves as a horizontal beam forming unit, and a vertical antenna element sequence, which is formed with a plurality of antenna elements and which serves as a vertical beam forming unit; and
the mapping section assigns the same antenna port to reference signals that correspond respectively to a plurality of antenna elements constituting the same horizontal antenna element sequence or a plurality of antenna elements constituting the same vertical antenna element sequence.

2. The radio base station according to claim 1, wherein the precoding processing section multiplies the reference signals corresponding to each antenna element constituting the same vertical antenna element sequence by varying weights of a precoder for forming a predetermined vertical beam.

3. The radio base station according to claim 1, wherein the precoding processing section multiplies the reference signals corresponding to each antenna element constituting the same horizontal antenna element sequence by varying weights of a precoder for forming a predetermined horizontal beam.

4. The radio base station according to one of claim 1 to claim 3, wherein the mapping section maps reference signals for the same vertical beam, among the reference signals corresponding to each antenna element constituting the same vertical antenna element sequence, to the same frequency domain and time domain radio resources.

5. The radio base station according to one of claim 1 to claim 3, wherein the mapping section frequency-division-multiplexes (FDM) and/or time-division-multiplexes (TDM) reference signals for different vertical beams, among the reference signals corresponding to each antenna element constituting the same vertical antenna element sequence.

6. The radio base station according to one of claim 1 to claim 3, wherein the mapping section code-division-multiplexes (CDM) reference signals corresponding to antenna elements constituting different vertical antenna element sequences.

7. The radio base station according to one of claim 1 to claim 3, wherein the antenna section comprises a cross-polarized antenna that is formed with the plurality of antenna elements.

8. The radio base station according to one of claim 1 to claim 3, wherein the reference signals comprise channel state measurement reference signals (CSI-RSs) and/or cell-specific reference signals (CRSs).

9. A radio communication system in which a radio base station carries out downlink communication with a user terminal by using a 3D beam that is formed with a horizontal beam having directivity in a horizontal plane and a vertical beam having directivity in a vertical plane, wherein:
the radio base station comprises:
an antenna section that comprises a horizontal antenna element sequence, which is formed with a plurality of antenna elements and serves as a horizontal beam forming unit, and a vertical antenna element sequence, which is formed with a plurality of antenna elements and serves as a vertical beam forming unit;
a mapping section that maps reference signals in association with predetermined antenna ports; and
a precoding processing section that carries out a precoding process of the reference signals,
wherein the mapping section assigns the same antenna port to reference signals that correspond respectively to a plurality of antenna elements constituting the same horizontal antenna element sequence or a plurality of antenna elements constituting the same vertical antenna element sequence.

10. The radio communication system according to claim 9, wherein the precoding processing section multiplies the reference signals corresponding to each antenna element constituting the same vertical antenna element sequence by varying weights of a precoder for forming a predetermined vertical beam.

11. A radio communication method to allow a radio base station to carry out downlink communication with a user terminal by using a 3D beam that is formed with a horizontal beam having directivity in a horizontal plane and a vertical beam having directivity in a vertical plane, wherein the radio base station comprises a horizontal antenna element sequence, which is formed with a plurality of antenna elements and which serves as a horizontal beam forming unit, and a vertical antenna element sequence, which is formed with a plurality of antenna elements and which serves as a vertical beam forming unit, and performs the steps of:
assigning the same antenna port to reference signals that correspond respectively to a plurality of antenna elements constituting the same horizontal antenna element sequence or a plurality of antenna elements constituting the same vertical antenna element sequence and mapping the reference signals; and
carrying out a precoding process of the reference signals.

12. The radio communication method according to claim 11, wherein the radio base station multiplies the reference signals corresponding to each antenna element constituting the same vertical antenna element sequence by varying weights of a precoder for forming a predetermined vertical beam.
